# EUROPÄISCHE PATENTSCHRIFT

(11) **EP 0 976 548 B1**
(45) Veröffentlichungstag und Bekanntmachung des Hinweises auf die Patenterteilung: **09.11.2005**
(21) Anmeldenummer: 99114665.5
(22) Anmeldetag: 27.07.1999
(51) Int. Cl.: B32B 27/36, C08L 67/02

(54) **Matte, koextrudierte Polyesterfolie, Verfahren zu ihrer Herstellung und ihre Verwendung**
Matt coextruded polyester foil, method of manufacture and use
Feuille polyester coextrudée mate, son procédé de fabrication et son utilisation

(30) Priorität: 31.07.1998 DE 19834603
(43) Veröffentlichungstag der Anmeldung: 02.02.2000
(73) Patentinhaber: Mitsubishi Polyester Film GmbH, 65203 Wiesbaden (DE)
(72) Erfinder: Peiffer, Herbert, 55126 Mainz (DE); Hilkert, Gottfried, 55291 Saulheim (DE); Davis, Richard Lee, 65187 Wiesbaden (DE)
(74) Vertreter: Zounek, Nikolai

(56) Entgegenhaltungen:
- EP-A- 0 144 878
- PATENT ABSTRACTS OF JAPAN vol. 1998, no. 05, 30. April 1998 (1998-04-30) & JP 10 006456 A (TOYOBO CO LTD), 13. Januar 1998 (1998-01-13)

## Beschreibung

Die Erfindung betrifft eine biaxial orientierte Polyesterfolie mit einer Basisschicht, die zu mindestens 80 Gew.-% aus einem thermoplastischen Polyester besteht, und mindestens einer matten Deckschicht, welche eine Mischung bzw. ein Blend aus zwei Polyester-Komponenten I und II enthält. Die Erfindung betrifft weiterhin ein Verfahren zur Herstellung der Folie und ihre Verwendung.

Die Verpackungsindustrie hat einen hohen Bedarf an transparenten, hochglänzenden Kunststoffolien, wie z.B. biaxial orientierte Polypropylen- oder biaxial orientierte Polyesterfolien. Daneben besteht in zunehmendem Maße ein Bedarf an solchen transparenten Folien, bei denen zumindest eine Oberflächenschicht nicht hochglänzend ist sondern sich durch ein charakteristisches mattes Erscheinungsbild auszeichnet und dadurch z.B. der Verpackung ein besonderes aktraktives und damit werbewirksames Aussehen verleiht.

In der EP 346 647 wird eine biaxial orientierte Polyesterfolie beschrieben, die mindestens eine Deckschicht enthält, die einen Füllstoff in einer Konzentration von 0,5 bis 50 % enthält, wobei der Durchmesser dieses Füllstoffes in einem bestimmten Verhältnis zur Schichtdicke der Deckschicht steht. Weiterhin weist die Deckschicht eine bestimmte Dicke und einen bestimmten Kristallisationsgrad auf, der mit Hilfe der Raman-Spektroskopie ermittelt wird.

In der US 4,399,179 wird eine koextrudierte biaxial orientierte Polyesterfolie beschrieben, die aus einer transparenten Basisschicht und mindestens einer matten Schicht besteht, welche im wesentliche aus einem bestimmten Polyethylenterephthalat-Copolymer besteht und zudem innerte Partikel mit einem Durchmeser von 0,3 bis 20 µm in einer Konzentration von 3 bis 40 % enthält. Das spezielle Copolymer ist eine Verarbeitungshilfe, durch die die Viskosität der die innerten Partikeln enthaltenen Schmelze herabgesetzt wird, so daß eine einwandfreie Extrusion dieser Schicht möglich ist. Die Mattheit der Folie wird durch Zugabe der inerten Partikel in die entsprechende Schicht erreicht.

In der EP-A 0 144 878 wird eine selbstragende orientierte Folie aus thermoplastischem Kunststoff beschrieben, welche auf wenigstens einer ihrer beiden Oberflächen eine durchgehende Polyesterbeschichtung trägt, die als wäßrige Dispersion auf die Folie vor dem letzten Streckschritt aufgebracht wird. Die Polyesterbeschichtung besteht aus einem Kondensationsprodukt von verschiedenen Monomeren bzw. von deren zur Bildung von Polyestern befähigten Derivaten, wie Isophthalsäure, aliphatische Dicarbonsäure, Sulfomonomere und aliphatisches oder cycloaliphatisches Glykol.

In dem Dokument JP-A-10006456 (PAJ- Zusammenfassung) ist eine Polyester-Verbundfolie hoher Transparenz beschrieben, die als Füllungsfolie beim Formen eingesetzt wird. Die Polyesterfolie umfasst eine Schicht, die als Hauptkomponente Polyethylenterephthalat enthält und zumindest eine weitere Schicht, die eine Mischung aus 20 bis 80 Gew.-% eines Polyester-Copolymers, das 50 bis 92 Mol-% Ethylenisophthalateinheiten, 5 bis 47 Mol-% Ethylenterephthalateinheiten und 3 bis 45 Mol-% Ethylen-2,6-naphthalateinheiten enthält und 80 bis 20 Gew.-% eines Kunststoffes ist, mit der Hauptkomponente Polyethylenterephthalat. Es findet sich keine Aussage über eine veränderbare Mattigkeit dieser Polyesterfolie.

Aufgabe der Erfindung ist es, eine koextrudierte biaxial orientierte Polyesterfolie mit mindestens einer matten Deckschicht zur Verfügung zu stellen, bei der die Mattigkeit der Deckschicht in weiten Bereichen variierbar sein soll, ohne physikalische Eigenschaften wie die Transparenz, Bedruckbarkeit, Prägbarkeit, Metallisierbarkeit der Polyesterfolie zu beeinträchtigen.

Gelöst wird diese Aufgabe durch eine Polyesterfolie mit mindestens einer matten Deckschicht, welche eine Mischung bzw. ein Blend aus zwei Komponenten I und II enthält, in der Weise, daß die Komponente I der Mischung bzw. des Blends im wesentlichen ein Polyethylenterephthalat-Homopolymer oder Polyethylenterephthalat Copolymer oder eine Mischung aus Homo- oder Copolymeren enthält, daß die Komponente I eine modifizierte Lösungsmittelviskosität mit einem SV-Wert im Bereich von 500 bis 800 aufweist und daß die Komponente II der Mischung bzw. des Blends aus einem Kondensationsprodukt der folgenden Monomeren bzw. deren zur Bildung von Polyestern befähigten Derivaten besteht:
A) 65 bis 95 Mol-% Isophthalsäure;
B) 0 bis 30 Mol-% wenigstens einer aliphatischen Dicarbonsäure der Formel

   HOOC(CH₂)ₙCOOH

   wobei n im Bereich von 1 bis 11 liegt;
C) 5 bis 15 Mol-% wenigstens eines Sulfomonomeren enthaltend eine Alkalimetallsulfonatgruppe an dem aromatischen Teil einer Dicarbonsäure;
D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;
wobei die Prozentangaben jeweils bezogen sind auf die Gesamtmenge der die Komponenten II bildenden Monomeren.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z.B. linsen-oder kugelförmiges Granulat, zusammengeschüttet und mit einer geeigneten Rüttelvorrichtung mechanisch miteinander gemischt. Eine andere Möglichkeit für die Erstellung der Mischung besteht darin, daß die jeweiligen Komponenten I und II in Granulatform jeweils für sich getrennt dem Extruder für die erfindungsgemäße Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten I und II, welcher nicht mehr in die ursprünglichen Bestandteilen zerlegt werden kann. Ein Blend weist Eigenschaften wie ein homogener Stoff auf und kann entsprechend durch geeignete Parameter charakterisiert werden.

Die Unteransprüche geben bevorzugte Ausführungsformen der Erfindung an, welche nachstehend zusätzlich erläutert werden.

Erfindungsgemäß ist die Folie zumindest zweischichtig. Sie umfaßt dann als Schichten eine Schicht B und die erfindungsgemäße Deckschicht A. In einer bevorzugten Ausführungsform der Erfindung ist die Folie dreischichtig aufgebaut und weist auf der einen Seite der Schicht B (=Basisschicht) die Deckschicht A und auf der anderen Seite der Schicht B eine weitere Schicht C auf. In diesem Fall bilden die beiden Schichten A und C die Deckschichten A und C.

Die erfindungsgemäße Deckschicht zeichnet sich durch eine charakteristische matte Oberfläche bzw. Optik aus und ist für die Verwendung als Verpackungsfolie oder für Anwendungen im industriellen Sektor gut geeignet.

Die **Basisschicht** B der Folie besteht bevorzugt zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethylcyclohexan und Terephthalsäure [= Poly(1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-C₆H₄-X-C₆H₄-OH, wobei X für -CH₂-, -C(CH₃)₂-, -C(CF₃)₂-, -O-, -S- oder -SO₂- steht. Daneben sind auch Bisphenole der Formel HO-C₆H₄-C₆H₄-OH gut geeignet.

Andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C₃-C₁₉) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Mindestens eine **Deckschicht** der erfindungsgemäßen Mehrschichtfolie enthält eine im folgenden näher beschriebene Mischung bzw. ein Blend aus zwei Komponenten I und II und gegebenenfalls zugesetzte Additive.

Die Komponente I der Deckschichtmischung bzw. des Blends ist allgemein ein thermoplastischer Polyester, insbesondere ein Polyester wie er für die Basisschicht näher beschrieben wurde. Für die Erzeugung hoher Mattgrade hat es sich dabei als günstig erwiesen, wenn das Polyesterpolymer für die Komponente I der erfindungsgemäßen Deckschicht eine an sich vergleichsweise geringe Viskosität aufweist. Für die Beschreibung der Viskositäten der Schmelzen wird eine modifizierte Lösungsmittelviskosität (SV-Wert oder "solution viscosity") verwendet. Für handelsübliche Polyethylenterephthalate, die sich zur Herstellung von biaxial orientierten Folien eignen, liegen die SV-Werte im Bereich von 500 bis 1200. Um eine hohe Mattheit der Folie im Sinne der vorliegenden Erfindung zu bekommen, hat es sich als günstig erwiesen, wenn der SV-Wert der Polymeren für die Komponente I der erfindungsgemäßen Deckschicht im Bereich von 500 bis 800, bevorzugt im Bereich von 500 bis 750, insbesondere bevorzugt im Bereich von 500 bis 700 liegen. Bevorzugt ist die Komponente I jedoch ein PET-Homo- oder Copolymer oder eine Mischung daraus.

Die Komponente II der Deckschichtmischung wird wie bereits angegeben durch Polykondensation von A) Isopthalsäure, B) einer aliphatischen Dicarbonsäure mit der Formel

HOOC(CH₂)ₙCOOH,

wobei
n im Bereich von 1 bis 11 liegt,
C) einem Sulfomonomeren enthaltend eine Alkalimetallsulfonatgruppe an dem aromatischen Teil einer aromatischen Dicarbonsäure und D) wenigstens einem aliphatischen oder cycloaliphatischen Alkylenglykol mit etwa 2 bis 11 Kohlenstoffatomen hergestellt. Die insgesamt anwesenden Säureäquivalente sollen auf molarer Basis im wesentlichen den insgesamt anwesenden Glykoläquivalenten entsprechen.

Als Komponente B) der Copolyester geeignete Dicarbonsäuren sind z.B. Malon-, Adipin-, Azelain-, Glutar-, Sebacin-, Kork-, Bernstein- und Brassylsäure sowie Mischungen dieser Säuren oder deren zur Bildung von Polyestern befähigte Derivate. Von den genannten Säuren wird Sebacinsäure bevorzugt.

Beispiele für Sulfomonomere, die eine Alkalimetallsulfonatgruppe an dem aromatischen Teil einer aromatischen Dicarbonsäure (Komponente C) enthalten, sind solche Monomere, die der folgenden allgemeinen Formel entsprechen:

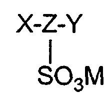

In dieser Formel ist
M ein einwertiges Kation eines Alkalimetalls,
Z ein dreiwertiger aromatischer Rest, und
X und Y sind Carboxylgruppen oder Polyester bildende Äquivalente.

Monomere dieser Art sind in den US-PSen 3,563,942 und 3,779,993 beschrieben. Beispiele solcher Monomeren sind Natrium-sulfoterephthalsäure, Natrium-5-sulfoisophthalsäure, Natrium-sulfophthalsäure, 5-(p-Natriumsulfophenoxy)-isophthalsäure, 5-(Natrium-sulfopropoxy)-isophthalsäure und dergleichen Monomere sowie deren zur Bildung von Polyestern befähigte Derivate, wie z.B. die Dimethylester. M ist vorzugsweise Na⁺, Li⁺ oder K⁺.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu solchen Gruppen zählen Carboxylgruppen sowie deren niedere Alkylester, z.B. Dimethylterephthalat, Diethylterephthalat und zahlreiche andere Ester, Halogenide oder Salze. Bevorzugt werden die Säuremonomeren als Dimethylester verwendet, da auf diese Weise die Kondensationreaktion besser gesteuert werden kann.

Als Komponente D) geeignete Glykole sind z.B. Ethylenglykol, 1,5-Pentandiol, 1,6-Hexandiol, Neopentylglykol, 1,10-Decandiol, Cyclohexan-dimethanol und ähnliche Substanzen. Bevorzugt wird Ethylenglykol verwendet.

Die Copolyester können durch bekannte Polymerisationstechniken hergestellt werden. Im allgemeinen wird so verfahren, daß die Säurekomponenten mit Glykol zusammengebracht und in Anwesenheit eines Veresterungskatalysators erhitzt werden, mit anschließender Zugabe eines Polykondensationskatalysators.

Es hat sich gezeigt, daß die verhältnismäßigen Anteile der Komponenten A, B, C und D, die zur Herstellung der erfindungsmäßigen Mischungen eingesetzt werden, entscheidend für das Erzielen der matten Deckschicht sind. So muß z.B. Isophthalsäure (Komponente A) zu mindestens etwa 65 Mol-% als Säurekomponente anwesend sein. Bevorzugt ist die Komponente A als reine Isophthalsäure, die in einer Menge von etwa 70 bis 95 Mol-% anwesend ist.

Für die Komponente B gilt, daß jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten der Mischung I, wenn die Komponente B in der Zusammensetzung enthalten ist.

Die Glykolkomponente ist in ungefähr stöchiometrischer Menge anwesend.

Die für die Zwecke der Erfindung geeigneten Copolyester zeichnen sich weiterhin dadurch aus, daß sie eine Säurezahl unter 10 , vorzugsweise von 0 bis 3, ein mittleres Mol-Gewicht unter etwa 50.000 und einen SV-Wert im Bereich von etwa 30 bis 700, vorzugsweise etwa 350 bis 650, aufweisen.

Das Verhältnis (Gewichtsverhältnis) der beiden Komponenten I und II der Deckschichtmischung bzw. des Blends kann innerhalb weiter Genzen variieren und richtet sich nach dem beabsichtigten Einsatzzweck der Mehrschichtfolie. Bevorzugt liegt das Verhältnis der Komponenten I und II in einem Bereich von I:II =10:90 bis I:II = 95:5, vorzugsweise zwischen I:II = 20:80 bis I:II = 95:5 und insbesondere zwischen I:II =30:70 bis I:II =95:5.

Die Basisschicht und die Deckschicht(en) können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 10 Gew.-% erwiesen. Durch die Zugabe von diesen Partikeln in die erfindungsgemäße Deckschicht A hat man eine weitere vorteilhafte Möglichkeit, den Mattgrad der Folie zu variieren. Mit der Zunahme der Pigmentkonzentration ist in der Regel auch eine Zunahme des Mattgrades der Folie verbunden. Eine detaillierte Beschreibung der Antiblockmittel findet sich beispielsweise in der EP-A 0 602 964.

Gegenstand der vorliegenden Erfindung ist auch ein Verfahren zur Herstellung dieser Folie. Es umfaßt das
a) Herstellen einer Folie aus Basis- und Deckschicht(en) durch Coextrusion,
b) biaxiale Verstrecken der Folie und
c) Thermofixieren der verstreckten Folie.

Zur Herstellung der erfindungsgemäßen Deckschicht werden zweckmäßig Granulate aus der Mischungskomponente I und Granulate aus der Mischungskomponente II im gewünschten Mischungsverhältnis direkt dem Extruder zugeführt. Es hat sich als zweckmäßig erwiesen, für die Extrusion der erfindungsgemäßen matten Deckschicht einen Zweischneckenextruder zu verwenden, wie er z.B. in der **EP 0 826 478** beschrieben ist. Die beiden Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich weitere Copolymere aus den Homopolymeren und den Copolymeren bilden können.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d.h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofern gewünscht, kann sich an die Querstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die Folie kann weiterhin auf mindestens einer ihrer Oberflächen beschichtet werden, so daß die Beschichtung auf der fertigen Folie eine Dicke von 5 bis 100 nm, bevorzugt 20 bis 70 nm, insbesondere 30 bis 50 nm aufweist. Die Beschichtung wird bevorzugt In-line aufgebracht, d.h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtungen äußerst homogen in den genannten Schichtdicken auftragen lassen. Die Beschichtungen werden bevorzugt als Lösungen, Suspensionen oder Dispersionen aufgetragen, besonders bevorzugt als wäßrige Lösung, Suspension oder Dispersion. Die genannten Beschichtungen verleihen der Folienoberfläche eine zusätzliche Funktion bspw. wird die Folie dadurch siegelfähig, bedruckbar, metallisierbar, sterilisierbar, antistatisch oder verbessern z.B. die Aromabarriere oder ermöglichen die Haftung zu Materialien, die ansonsten nicht auf der Folienoberfläche haften würden (z.B. fotografische Emulsionen). Beispiele für Stoffe/Zusammensetzungen, die eine zusätzliche Funktionalität verleihen sind:

Acrylate, wie sie bspw. beschrieben sind in der WO 94/13476, Ethylenvinylalkohole (EVA), PVDC, Wasserglas (Na₂SiO ),₄ hydrophilische Polyester (5-Nasulfoisophthalsäurehaltige PET/IPA Polyester wie sie bspw. beschrieben sind in der EP-A-0 144 878, US-A-4,252,885 oder EP-A-0 296 620, Vinylacetate wie sie bspw. beschrieben sind in der WO 94/13481, Polyvinylacetate, Polyurethane, Alkali- oder Erdalkalisalze von C₁₀-C₁₈-Fettsäuren, Butadiencopolymere mit Acrylnitril oder Methylmethacrylat, Methacrylsäure, Acrylsäure oder deren Ester.

Die genannten Stoffe/Zusammensetzungen werden als verdünnte Lösung, Emulsion oder Dispersion vorzugsweise als wäßrige Lösung, Emulsion oder Disperson auf eine oder beide Folienoberflächen aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann die zuvor erwähnten gewünschten Schichtdicken.

Des weiteren können die Folien - vorzugsweise in einem Off-Line-Verfahren mit Metallen wie Aluminium oder keramischen Materialien wie SiOₓ oder AlₓO_{y} beschichtet werden. Dies verbessert insbesondere ihre Gasbarriereeigenschaften.

Die erfindungsgemäße Polyesterfolie enthält vorzugsweise noch eine zweite Deckschicht C. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere oder Polymermischungen für die Basis- oder die erfindungsgemäße erste Deckschicht enthalten kann, welche aber nicht mit denen der ersten Deckschicht identisch sein müssen. Die zweite Deckschicht kann auch andere gängige Deckschichtpolymere enthalten.

Zwischen Basisschicht und Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschicht(en) ist im allgemeinen größer als 0,1 µm und liegt vorzugsweise im Bereich von 0,2 bis 6 µm, insbesondere 0,3 bis 5.5 µm, speziell 0,4 bis 4,5 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 300 µm, insbesondere 5 bis 250 µm, vorzugsweise 6 bis 200 µm, wobei die Basisschicht einen Anteil von vorzugsweise etwa 40 bis 90 % an der Gesamtdicke hat.

Ein weiterer Vorteil besteht darin, daß die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, daß das Regenerat in einem Anteil von bis zu 50 Gew.-%, bevorzugt 10 bis 50 Gew.-%, jeweils bezogen auf das Gesamtgewicht der Folie, wiederverwendet werden kann, ohne daß dabei die physikalischen Eigenschaften der Folie nennenswert negativ beeinflußt werden.

Die Folie eignet sich hervorragend zur Verpackung von licht- und/oder luftempfindlichen Nahrungs- und Genußmitteln. Speziell geeignet ist sie zur Herstellung von Verpackungen für Kaffee, insbesondere gemahlenem Kaffee.

Zusammengefaßt zeichnet sich die erfindungsgemäße Folie durch einen niedrigen Glanz, insbesondere einen niedrigen Glanz der Folienoberfläche A, und durch eine vergleichsweise niedrige Trübung aus. Außerdem besitzt sie ein gutes Wickel- und Verarbeitungsverhalten. Weiterhin ist erwähnenswert, daß die erfindungsgemäße Deckschicht gut mit Kugelschreiber, Filzstift oder Füllfeder beschriftbar ist.

Der Glanz der Folienoberfläche A ist niedriger als 70. In einer bevorzugten Ausführungsform beträgt der Glanz dieser Seite weniger als 60 und in einer besonders bevorzugten Ausführungsform weniger als 50. Diese Folienoberfläche vermittelt damit einen besonders hohen werbewirksamen Charakter und eignet sich daher insbesondere als außenliegende Oberfläche bei einer Verpackung.

Die Trübung der Folie ist kleiner als 40 %. In einer bevorzugten Ausführungsform beträgt die Trübung der Folie weniger als 35 % und in einer besonders bevorzugten Ausführungsform weniger als 30 %. Durch die vergleichsweise geringe Trübung der Folie (verglichen mit einer matten Monofolie, siehe Vergleichsbeispiel ) kann die Folie z.B. im Konterdruck bedruckt werden oder es können Sichtfenster eingebaut werden, durch die z.B. das Füllgut sehr gut zu erkennen ist.

Weitere Anwendungsgebiete sind die Verwendung zur Herstellung von Etiketten (Labels), als Trennfolie zur Herstellung von GFK-Halbzeugen, als Prägefolie oder In-Mold-Labelling.

Die nachstehende Tabelle (Tabelle 1) faßt die wichtigsten erfindungsgemäßen Folieneigenschaften noch einmal zusammen.

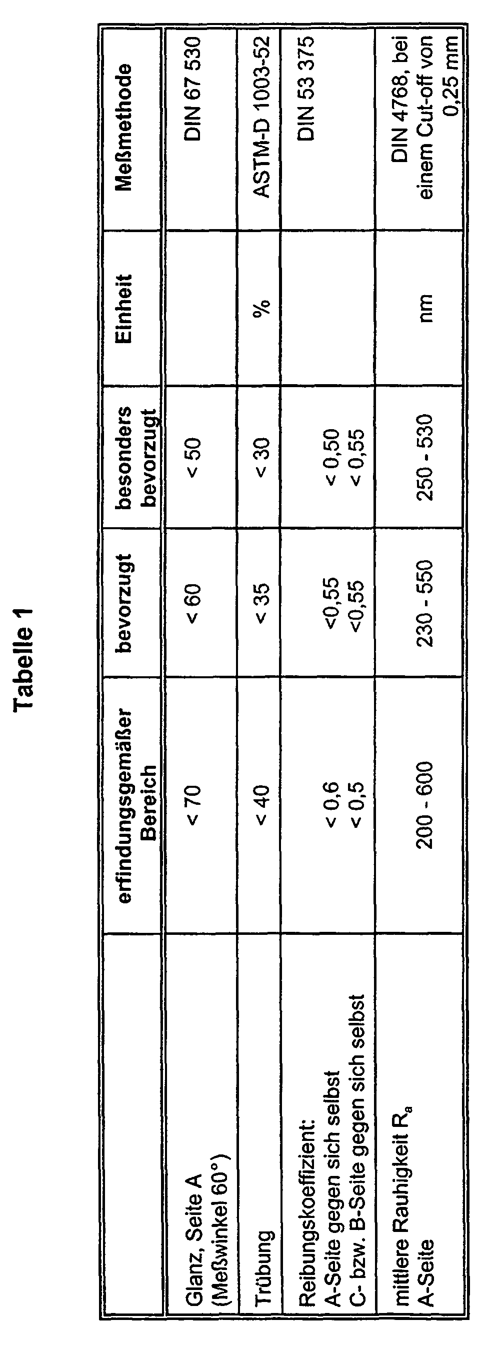

Zur Charakterisierung der Rohstoffe und der Folien wurden die folgenden Methoden benutzt:

Zur Bestimmung des SV-Wertes (SV = solvent viscosity) wurde eine Polyester-Probe in einem Lösungsmittel (Dichloressigsäure) gelöst (1 Gew-%ige Lösung). Die Viskosität dieser Lösung sowie die Viskosität des reinen Lösungsmittels wurden in einem Ubbelohde-Viskosimeter gemessen. Aus den beiden Werten wurde der Quotient (= relative Viskosität ηᵣₑₗ) ermittelt, davon 1,000 abgezogen und dieser Wert mit 1000 multipliziert. Das Resultat war der SV-Wert ("solution viscosity").

Die Reibung wurde nach DIN 53 375 bestimmt. Die Gleitreibungszahl wurde 14 Tage nach der Produktion gemessen.

Die Oberflächenspannung wurde mit der sogenannten Tintenmethode (DIN 53 364) bestimmt.

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1 °-Spaltblende eingesetzt wurde.

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Die Rauhigkeit Rₐ der Folie wurde nach DIN 4768 bei einem Cut-off von 0,25 mm bestimmt.

Die folgenden Beispiele illustrieren die Erfindung.

### Beispiel 1

a) Zubereitung der Komponente II für die erfindungsgemäße Deckschichtmischung Ein Copolyester mit ca. 90 Mol-% Isophthalsäure und 10 Mol-% des Natriumsalzes der 5-Sulfoisophthalsäure als Säurekomponente und 100 Mol-% Ethylenglykol als Glykolkomponente wurde nach dem folgenden Verfahren hergestellt:
   Ein 2 I fassender Reaktionsbehälter aus Edelstahl, der mit einem Ankerrührer, einem Thermoelement zur Messung der Temperatur des Gefäßinhalts, einer 18 Zoll-ClaisenNigreux-Destillationskolonne mit Kühler und Vorlage, einer Einlaßöffnung und einem Heizmantel ausgerüstet war, wurde auf 190 °C vorgeheizt, mit Stickstoff gespült und mit 1065,6 g Dimethylisophthalat, 180,6 g Dimethyl-5-sulfoisophthalat-natriumsalz und 756,9 g Ethylenglykol befüllt. Außerdem wurden noch ein Puffer (Na₂CO₃•10 H₂O-0,439 g) und ein Umesterungskatalysator (Mn(OAc)₂ · 4 H₂O - 0,563 g) in den Reaktionsbehälter gegeben. Das Gemisch wurde unter Rühren erhitzt, wobei Methanol ab destillierte. Während der Destillation wurde die Temperatur im Behälter allmählich auf 250 °C erhöht. Als das Gewicht des Destillates der theoretischen Methanolausbeute entsprach, wurde eine Ethylenglykollösung mit einem Gehalt von 0,188 g phosphoriger Säure zugesetzt. Die Destillationskolonne wurde durch einen gekrümmten Dampfabzug mit Vorlage ersetzt. Dem Reaktiongemisch wurden 20 g reines Ethylencarbonat zugegeben, und sofort setzte eine heftige Gasentwicklung (CO₂) ein. Die CO₂-Entwicklung ließ nach etwa 10 min nach. Es wurde dann ein Unterdruck von 240 mm Hg gezogen und der Polykondensationskatalysator (0,563 g Sb₂O₃) in einer Ethylenglykolaufschlämmung) hinzugefügt. Das Reaktionsgemisch wurde unter Beibehaltung des Unterdruckes von 240 mm Hg 10 min gerührt, wonach der Druck in Stufen von jeweils 10 mm Hg/min von 240 mm Hg auf 20 mm Hg weiter reduziert wurde. Sobald das Vakuum im System auf 20 mm Hg reduziert war, wurde die Gefäßtemperatur mit einer Geschwindigkeit von 2 °C/min von 250 °C auf 290 °C angehoben. Bei einer Temperatur von 290 °C im Gefäß wurde die Rührergeschwindigkeit gedrosselt und der Druck auf höchstens 0,1 mm Hg gesenkt. Zu diesem Zeitpunkt wurde ein Amperemeterablesung des Rührermotors vorgenommen. Die Viskosität des Polymeren wurde gesteuert, indem man die Polykondensation nach festen Werten für die Veränderung der Amperezahl des Rührermotors von (jeweils) 2,3 A ablaufen ließ. Als das gewünschte Molgewicht erreicht war, wurde das Gefäß mit Stickstoff unter Druck gesetzt, um das flüssige Polymere aus dem Bodenstopfen des Gefäßes in ein Abschreckbad aus Eiswasser zu pressen.
B) Mischungsherstellung für die erfindungsgemäße Deckschicht A
   Es wurden 80 Gew.-% der Komponente I (Polyethylenterephthalat mit einem SV-Wert von 680) mit 20 Gew.-% der Komponente II dem Einfülltrichter eines Zweischneckenextruders zugeführt und beide Komponenten zusammen bei ca. 300 °C extrudiert und dem Deckschichtkanal A einer Mehrschichtdüse zugeführt.

Zugleich wurden Chips aus Polyethylenterephthalat bei 160 °C auf eine Restfeuchte von weniger als 50 ppm getrocknet und dem Extruder für die Basisschicht zugeführt. Ebenfalls wurden Chips aus Polyethylenterephthalat und einem Füllstoff dem Extruder für die Deckschicht C zugeführt. Durch Coextrusion und anschließende stufenweise Orientierung in Längs- und Querrichtung wurde dann eine transparente dreischichtige Folie mit ABC-Aufbau und einer Gesamtdicke von 12 µm hergestellt. Die Deckschichten hatten eine Dicke von jeweils 1,5 µm.

### Basisschicht B:

- 95 Gew.-%: Polyethylenterephthalat (RT 49 von Hoechst AG) mit einem SV-Wert von 800 und
- 5 Gew.-%: Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 µm.

### Deckschicht A:

- 80 Gew.-%: Komponente I und
- 20 Gew.-%: Komponente II.

### Deckschicht C:

- 90 Gew.-%: Polyethylenterephthalat (RT 49 von Hoechst AG) mit einem SV-Wert von 800 und
- 10 Gew.-%: Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 µm.

Die einzelnen Verfahrensschritte waren:

| | | | |
|---|---|---|---|
| Extrusion | Temperaturen | Deckschicht | 300 °C |
| | | Basisschicht | 300 °C |
| | Temperatur der Abzugswalze | | 30 °C |
| | Düsenspaltweite | | 1 mm |
| Längsstreckung | Temperatur | | 85-135 °C |
| | Längsstreckverhältnis | | 4,0 : 1 |
| Querstreckung | Temperatur | | 85-135 °C |
| | Querstreckverhältnis | | 4,0 : 1 |
| Fixierung | Temperatur | | 230 °C |

### Beispiel 2

Analog zu Beispiel 1 wurde durch Coextrusion eine dreischichtige Folie mit einer Gesamtdicke von 12 µm hergestellt. Es wurde nur die Zusammensetzung der Deckschicht A geändert:
Deckschicht A:
   - 75 Gew.-%: Komponente I und
   - 25 Gew.-%: Komponente II.

### Beispiel 3

Eine coextrudierte Folie mit der Rezeptur gemäß Beispiel 1, bei der die Deckschicht A wie folgt zusammengesetzt war:
- 70 Gew.-%: Komponente I und
- 30 Gew.-%: Komponente II.

### Beispiel 4

Eine coextrudierte Folie mit der Rezeptur gemäß Beispiel 1, bei der die Deckschicht A wie folgt zusammengesetzt war:
- 60 Gew.-%: Komponente I und
- 40 Gew.-%: Komponente II.

### Vergleichsbeispiel

Es wurde eine Monofolie hergestellt, die wie die Deckschicht A aus Beispiel 3 zusammengesetzt war. Die Folienoberflächen hatten die geforderte Mattheit, die Folie entsprach jedoch nicht den gestellten Anforderungen, weil sie zu trüb war. Außerdem war es sehr schwer, die Folie verfahrenssicher und daher wirtschaftlich herzustellen.

**Tabelle 2**

| Beispiel Nr. | Mischungsverhä Itnis K I:K II der Deckschicht A | Folie n-dicke (µm) | Deckschichtdicke A/C (µm) | Folienaufbau | Glanz (60° Meßwinkel) | | Trübung |
|---|---|---|---|---|---|---|---|
| | | | | | A-Seite | C-Seite | |
| 1 | 80:20 | 12 | 1,5/1,5 | ABC | 65 | 175 | 25 |
| 2 | 75:25 | 12 | 1,5/1,5 | ABC | 55 | 175 | 26 |
| 3 | 70:30 | 12 | 1,5/1,5 | ABC | 45 | 175 | 28 |
| 4 | 60:40 | 12 | 1,5/1,5 | ABC | 35 | 175 | 30 |
| VB | 70:30 | 12 | | A | 35 | 160 | 70 |

## Patentansprüche

1. Polyesterfolie mit einer Basisschicht, die zu mindestens 80 Gew.-% aus einem thermoplastischen Polyester besteht, und mindestens einer matten Deckschicht, welche eine Mischung bzw. ein Blend aus zwei Komponenten I und II enthält, **dadurch gekennzeichnet, daß** die Komponente I der Mischung bzw. des Blends im wesentlichen ein Polyethylenterephthalat-Homopolymer oder Polyethylenterephthalat Copolymer oder eine Mischung aus Homo- oder Copolymeren enthält, daß die Komponente I eine modifizierte Lösungsmittelviskosität mit einem SV-Wert im Bereich von 500 bis 800 aufweist und daß die Komponente II der Mischung bzw. des Blends aus einem Kondensationsprodukt der folgenden Monomeren bzw. deren zur Bildung von Polyestern befähigten Derivaten besteht:
A) 65 bis 95 Mol-% Isophthalsäure;
B) 0 bis 30 Mol-% wenigstens einer aliphatischen Dicarbonsäure der Formel
HOOC(CH₂)ₙCOOH
wobei
n im Bereich von 1 bis 11 liegt;
C) 5 bis 15 Mol-% wenigstens eines Sulfomonomeren enthaltend eine Alkalimetallsulfonatgruppe an dem aromatischen Teil einer Dicarbonsäure;
D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;
wobei die Prozentangaben jeweils bezogen sind auf die Gesamtmenge der die Komponenten II bildenden Monomeren.

2. Folie gemäß Anspruch 1, **dadurch gekennzeichnet, daß** das Mischungsverhältnis der Komponenten I und II im Bereich von I:II = 10:90 bis I:II 95:5, vorzugsweise zwischen I:II = 20:80 bis I:II = 95:5 und insbesondere zwischen I:II =30:70 bis I:II =95:5 liegt.

3. Folie gemäß einem oder mehreren der Ansprüche 1 und 2, **dadurch gekennzeichnet, daß** die Deckschicht eine Dicke von 0,2 bis 6,0 µm, vorzugsweise von 0,3 bis 5,5 µm, besonders bevorzugt von 0,4 bis 4,5 µm, aufweist.

4. Folie gemäß einem oder mehreren der Ansprüche 1 bis 3, **dadurch gekennzeichnet, daß** sie zweischichtig ist und aus der Basisschicht und der Deckschicht besteht.

5. Folie gemäß einem oder mehreren der Ansprüche 1 bis 3, **dadurch gekennzeichnet, daß** sie dreischichtig ist und aus der Basisschicht und je einer Deckschicht auf beiden Seiten der Basisschicht besteht.

6. Folie gemäß einem oder mehreren der Ansprüche 1 bis 5, **dadurch gekennzeichnet, daß** die Deckschicht A mit anorganischen Füllstoffen in einer Konzentration von bis zu 10 % pigmentiert ist.

7. Folie nach einem oder mehreren der Ansprüche 1 bis 6, **dadurch gekennzeichnet, daß** sie auf mindestens einer Oberfläche metallisiert oder mit SiO_{x,} AlₓO_{y}, Ethylenvinylalkohol, PVDC, Wasserglas, hydrophilischem Polyester, Vinylacetat, Polyvinylacetat, Polyurethan, Alkali- oder Erdalkali- Fettsäuresalze, Butadiencopolymer, (Meth)acrylsäure oder deren Ester oder Silikon beschichtet ist.

8. Verfahren zur Herstellung einer Polyesterfolie nach Anspruch 1, umfassend die Schritte:
Herstellen der Polyesterfolie aus Basis- und Deckschicht(en) durch Koextrusion, biaxiales Verstrecken der Polyesterfolie und Thermofixieren der verstreckten Polyesterfolie, wobei mindestens eine Deckschicht aus zwei Komponenten I und II gemischt wird bzw. ein Blend aus zwei Komponenten I, II hergestellt wird, die Komponente I ein Polyethylenterephthalat-Homopolymer, Polyethylenterephthalat-Copolymer oder eine Mischung aus Homo- und Copolymeren enthält und die Komponente II aus einem Kondensationsprodukt aus 65 bis 95 Mol-% Isophthalsäure, 0 bis 30 Mol-% einer aliphatischen Dicabonsäure der Formel HOOC(CH₂)ₙ COOH, wobei n im Bereich von 1 bis 11 liegt, 5 bis 15 Mol-% eines Sulfomonomeren enthaltend eine Alkalimetallsulfonatgruppe an dem aromatischen Teil einer Dicarbonsäure und die zur Bildung von 100 Mol-% Kondensat notwendige stöchiometrische Menge eines copolymerisierbaren aliphatischen oder cycloaliphatischen Glykols mit 2 bis 11 Kohlenstoffatomen; wobei die Prozentangaben jeweils auf die Gesamtmenge der die Komponente II bildenden Monomeren bezogen sind.

9. Verwendung der Folie nach einem oder mehreren der Ansprüche 1 bis 7 zum Verpacken von Nahrungs- und Genußmitteln.

10. Verwendung der Folie nach einem oder mehreren der Ansprüche 1 bis 7 als laminierfähige Folie.

11. Verwendung der Folie nach einem oder mehreren der Ansprüche 1 bis 7 als metallisierbare Folie.

12. Verwendung der Folie nach einem oder mehreren der Ansprüche 1 bis 7 als bedruckbare Folie.

13. Verwendung der Folie nach einem oder mehreren der Ansprüche 1 bis 7 als Label.

14. Verwendung der Folie nach einem oder mehreren der Ansprüche 1 bis 7 als Trennfolie zur Herstellung von GFK-Halbzeugen.

15. Verwendung der Folie nach einem oder mehreren der Ansprüche 1 bis 7 als Prägefolie.

16. Verwendung der Folie nach einem oder mehreren der Ansprüche 1 bis 7 als In-Mold-Label.

## Claims

1. A polyester film with a base layer at least 80% by weight of which is composed of a thermoplastic polyester, and with at least one matt outer layer which comprises a mixture or a blend of two components I and II, wherein component I of the mixture or of the blend comprises essentially a polyethylene terephthalate homopolymer or polyethylene terephthalate copolymer or a mixture of homo- or copolymers, component I exhibiting a modified solvent viscosity, having a SV-value in the range of from 500 to 800, and component II of the mixture or of the blend consists of the condensation product of the following monomers and/or of their derivates capable of forming polyesters:
A) from 65 to 95 mol% of isophthalic acid;
B) from 0 to 30 mol% of at least one aliphatic dicarboxylic acid with the formula
HOOC(CH₂)ₙCOOH,
where
n is from 1 to 11;
C) from 5 to 15 mol% of at least one sulfomonomer comprising an alkali metal sulfonate group on the aromatic moiety of a dicarboxylic acid;
D) a copolymerizable aliphatic or cycloaliphatic glycol having from 2 to 11 carbon atoms, in the stoichiometric amount necessary to form 100 mol% of condensate;
where each of the percentages given is based on the total amount of the monomers forming component II.

2. A film as claimed in claim 1, wherein the mixing ratio of components I and II is from I:II = 10:90 to I:II = 95:5, preferably from I:II = 20:80 to I:II = 95:5 and in particular from I:II = 30:70 to I:II = 95:5.

3. A film as claimed in one or more of claims 1 to 2, wherein the thickness of the outer layer is from 0.2 to 6.0 µm, preferably from 0.3 to 5.5 µm, particularly preferably from 0.4 to 4.5 µm.

4. A film as claimed in one or more of claims 1 to 3, which has two layers and is composed of the base layer and the outer layer.

5. A film as claimed in one or more of claims 1 to 3, which has three layers and is composed of the base layer and of an outer layer on each side of the base layer.

6. A film as claimed in one or more of claims 1 to 5, wherein outer layer A has been pigmented with a concentration of up to 10% of inorganic fillers.

7. A film as claimed in one or more of claims 1 to 6, at least one surface of which has been metallized or has been coated with SiOₓ, AlₓO_{y}, ethylvinyl alcohol, PVDC, water glass, hydrophilic polyester, vinyl acetate, polyvinyl acetate, polyurethane, the alkali-metal or alkaline-earth-metal salts of fatty acids, butadiene copolymer, (meth)acrylic acid or its esters, or silicone.

8. A process for producing the film as claimed in claim 1, encompassing the steps of:
producing a film from base and outer layer(s) by coextrusion, biaxial orientation of the film, and heat-setting of the oriented film, wherein at least one outer layer is mixed from two components I and II and/or a blend is produced from two components I, 11, component I comprising polyethylene terephthalate homopolymer, polyethylene terephthalate copolymer or a mixture of homo- or copolymers, and component II consisting of a condensation product from 65 to 95 mol% of isophthalic acid, from 0 to 30 mol% of an aliphatic dicarboxylic acid with the formula HOOC(CH₂)ₙCOOH, where n is from 1 to 11, from 5 to 15 mol% of a sulfomonomer, comprising an alkali metal sulfonate group on the aromatic moiety of a dicarboxylic acid, and a copolymerizable aliphatic or cycloaliphatic glycol having from 2 to 11 carbon atoms, in the stoichiometric amount necessary to form 100 mol% of condensate, wherein each of the percentages given is based on the total amount of the monomers forming component II.

9. The use of the film as claimed in one or more of claims 1 to 7 for packaging foods and other consumable items.

10. The use of the film as claimed in one or more of claims 1 to 7 as a laminatable film.

11. The use of the film as claimed in one or more of claims 1 to 7 as a metallizable film.

12. The use of the film as claimed in one or more of claims 1 to 7 as a printable film.

13. The use of the film as claimed in one or more of claims 1 to 7 as a label.

14. The use of the film as claimed in one or more of claims 1 to 7 as a release film for producing glass-fiber-reinforced semifinished products.

15. The use of the film as claimed in one or more of claims 1 to 7 as a hot-stamping foil.

16. The use of the film as claimed in one or more of claims 1 to 7 as an in-mold label.

## Revendications

1. Feuille de polyester avec une couche de base composée à au moins 80 % en poids d'un polyester thermoplastique et avec au moins une couche de couverture mate, laquelle contient un mélange ou un blend de deux composants I et II, **caractérisée en ce que** le composant I du mélange ou du blend contient essentiellement un homopolymère de poly(téréphtalate d'éthylène) ou un copolymère de poly(téréphtalate d'éthylène) ou un mélange d'homopolymère et de copolymère, **en ce que** le composant I présente une viscosité modifiée dans un solvant avec une valeur SV dans l'intervalle de 500 à 800, et **en ce que** le composant II du mélange ou du blend consiste en un produit de condensation des monomères ou de leurs dérivés aptes à la formation de polyesters suivants :
A) 65 à 95 % en mole d'acide isophtalique ;
B) 0 à 30 % en mole d'au moins un acide dicarboxylique aliphatique de la formule
HOOC(CH₂)ₙCOOH
dans laquelle
n est compris dans l'intervalle de 1 à 11 ;
C) 5 à 15 % en mole d'au moins un sulfomonomère, contenant un groupe sulfonate de métal alcalin sur la partie aromatique d'un acide dicarboxylique ;
D) la quantité stoechiométrique d'un glycol aliphatique ou cycloaliphatique copolymérisable avec 2 à 11 atomes de carbone, nécessaire pour la formation de 100 % en mole de condensat ;
sachant que les données en pour-cent sont rapportées respectivement à la quantité totale des monomères formant le composant II.

2. Feuille selon la revendication 1, **caractérisée en ce que** le rapport de mélange des composants I et II se trouve dans l'intervalle de I : II = 10 : 90 à I : II = 95 : 5, de préférence de I : II = 20 : 80 à I : II = 95 : 5 et en particulier de I : II = 30 : 70 à I : II = 95 : 5.

3. Feuille selon une ou plusieurs des revendications 1 et 2, **caractérisée en ce que** la couche de couverture présente une épaisseur de 0,2 à 6,0 µm, de préférence de 0,3 à 5,5 µm, de façon particulièrement préférée de 0,4 à 4,5 µm.

4. Feuille selon une ou plusieurs des revendications 1 à 3, **caractérisée en ce qu'**elle est en deux couches et qu'elle consiste en la couche de base et la couche de couverture.

5. Feuille selon une ou plusieurs des revendications 1 à 3, **caractérisée en ce qu'**elle est en trois couches et qu'elle consiste en la couche de base et en une couche de couverture sur chacune des deux faces de la couche de base.

6. Feuille selon une ou plusieurs des revendications 1 à 5, **caractérisée en ce que** la couche de couverture A est pigmentée par des charges inorganiques dans une concentration jusqu'à 10 %.

7. Feuille selon une ou plusieurs des revendications 1 à 6, **caractérisée en ce qu'**elle est métallisée sur au moins une surface ou revêtue de SiOₓ, d'AlₓO_{y}, d'alcool éthylènevinylique, de PVDC, de verre soluble, de polyester hydrophile, d'acétate de vinyle, d'acétate de polyvinyle, de polyuréthane, de sels alcalins ou alcalino-terreux d'acides gras, de copolymères du butadiène, d'acide (méth)acrylique ou de ses esters, ou de silicone.

8. Procédé de fabrication d'une feuille de polyester selon la revendication 1, comprenant les étapes :
Fabrication de la feuille de polyester en une couche de base et en une ou en des couches de couverture par co-extrusion, étirage biaxial de la feuille de polyester et thermofixation de la feuille de polyester étirée, sachant qu'au moins une couche de couverture est mélangée en deux composants I et II, ou qu'un blend de deux composants I et II est fabriqué, que le composant I contient un homopolymère de poly(téréphtalate d'éthylène), un copolymère de poly(téréphtalate d'éthylène), ou un mélange d'homopolymère et de copolymère et que le composant II consiste en un produit de condensation de 65 à 95 % en mole d'acide isophtalique, de 0 à 30 % en mole d'un acide dicarboxylique aliphatique de la formule HOOC(CH₂)ₙCOOH, sachant que n est compris dans l'intervalle de 1 à 11, de 5 à 15 % en mole d'un sulfomonomère contenant un groupe sulfonate de métal alcalin sur la partie aromatique d'un acide dicarboxylique et de la quantité stoechiométrique d'un glycol aliphatique ou cycloaliphatique copolymérisable avec 2 à 11 atomes de carbone, nécessaire pour la formation de 100 % en mole de condensat ; sachant que les données en pour-cent sont rapportées respectivement à la quantité totale des monomères formant le composant II.

9. Utilisation de la feuille selon une ou plusieurs des revendications 1 à 7 pour l'emballage de denrées alimentaires et de stimulants.

10. Utilisation de la feuille selon une ou plusieurs des revendications 1 à 7 comme feuille stratifiable.

11. Utilisation de la feuille selon une ou plusieurs des revendications 1 à 7 comme feuille métallisable.

12. Utilisation de la feuille selon une ou plusieurs des revendications 1 à 7 comme feuille imprimable.

13. Utilisation de la feuille selon une ou plusieurs des revendications 1 à 7 comme étiquette.

14. Utilisation de la feuille selon une ou plusieurs des revendications 1 à 7 comme feuille de séparation pour la fabrication de produits semi-finis en plastique renforcé de fibres de verre.

15. Utilisation de la feuille selon une ou plusieurs des revendications 1 à 7 comme feuille à matricer.

16. Utilisation de la feuille selon une ou plusieurs des revendications 1 à 7 comme étiquette dans un moule.
